# EUROPÄISCHE PATENTSCHRIFT

(11) **EP 2 771 236 B1**
(45) Veröffentlichungstag und Bekanntmachung des Hinweises auf die Patenterteilung: **16.03.2016**
(21) Anmeldenummer: 12798145.4
(22) Anmeldetag: 25.10.2012
(51) Int. Cl.: E06B 3/66, E06B 3/663, E06B 3/67, E06B 3/677, B64B 1/14, E04B 1/80

(54) **BAUELEMENT**
CONSTRUCTION ELEMENT
ÉLÉMENT STRUCTURAL

(30) Priorität: 28.10.2011 DE 102011117144
(43) Veröffentlichungstag der Anmeldung: 03.09.2014
(73) Patentinhaber: Lück, Stefan, 61169 Friedberg-Ockstadt (DE)
(72) Erfinder: Lück, Stefan, 61169 Friedberg-Ockstadt (DE)
(74) Vertreter: Harbach, Ulrich
(86) Internationale Anmeldenummer: PCT/EP2012/004453
(87) Internationale Veröffentlichungsnummer: WO 2013/060455

(56) Entgegenhaltungen:
- WO-A1-00/68540
- US-A1- 2010 330 310

## Beschreibung

Die Erfindung betrifft ein Bauelement, umfassend zwei im Wesentlichen parallel zueinander angeordnete Deckschichten und eine geschlossene Rahmenstruktur, die derart an die Deckschichten angeformt und zwischen den Deckschichten angeordnet ist, dass ein gasdichter Hohlraum gebildet wird, wobei der Hohlraum ein Vakuum enthält. Sie betrifft weiter ein Verfahren zur Herstellung eines derartigen Bauelements sowie ein Gebäude und ein Verfahren zu dessen Ausrüstung. Derartige Bauelemente und Verfahren sind beispielsweise aus der WO 2006/003199 A1 bekannt.

Eine der wichtigsten Herausforderungen für die Zukunft ist, den Verbrauch an Rohstoffen drastisch zu reduzieren. Insbesondere im Bausektor liegen hier sowohl für zukünftige Projekte, als auch im Bestand, erhebliche Potentiale brach. Das betrifft sowohl den durch die Nutzung entstehenden Verbrauch an Energie, als auch die graue Energie, die mit Bau, Erhalt und Abriss der Gebäude verbunden ist. Eine weitere Herausforderung besteht darin, erneuerbare Energie, möglichst ohne Konkurrenz zur Lebensmittelproduktion und zum Naturschutz, kostengünstig zu gewinnen und speicherbar zu machen.

Hinsichtlich der durch Nutzung des Gebäudes verbrauchten Energie liegt in jüngster Zeit der Fokus auf einer Verbesserung der Wärmeisolierung. Hinsichtlich der verbrauchten Energie insbesondere beim Bau kommen Leichtbauweisen zur Anwendung. In beiden Bereichen gibt es Ansätze, hier Vakuumtechnik zur Anwendung zu bringen.

Nach dem Stand der Technik wird bei Vakuumisolationspaneelen (VIP) und bei Vakuumisolationssandwichpaneelen (VIS) ein Stützkern aus pyrogener Kieselsäure, aus Mineralfasern oder aus anderen offenporigen Dämmstoffen verwendet, der die Unterbindung der Gaswärmeleitung bei höheren Restdrücken ermöglicht. Dadurch soll, bei geringeren Anforderungen an die Hülle, die langfristige Sicherung des Vakuums in den Paneelen ermöglicht werden. Zum Erhalt eines Hochvakuums müssten besonders die Ränder der Paneele mit z. B. permeationsdichtem Edelstahl ausgebildet werden, was im Vergleich zu z.B. alubedampfter Folie, eine höhere Wärmeleitung über die Randbereiche zur Folge hätte. Damit wäre der erzielbare U-Wert besonders bei kleineren Paneelen höher, als das bei folienumhüllten VIPs der Fall ist.

Bei Vakuumisolierverglasungen (VIG) hingegen ist es notwendig, dass ein Hochvakuum erzielt wird, da lediglich kleine Abstandhalter, die die Durchsicht kaum behindern dürfen, eingebaut werden. Die besondere Herausforderung liegt hier sowohl in der Randverbindung, die eine minimale Wärmeleitung mit maximaler Diffusionsdichtigkeit und leicht elastischen Verhalten kombinieren muss. Ebenso ist das Verhältnis von Volumen zu Oberfläche für das Erzielen und den Erhalt des Hochvakuums problematisch und erfordert ein sehr sauberes Arbeiten sowie eine hervorragende Reinigung der Oberflächen vor dem Zusammenfügen.

Allen oben aufgeführten Vakuumdämmungen, die dem Stand der Technik entsprechen, ist gemein, dass sie nicht vor Ort in einem Bauprozess produziert und in der Größe angepasst werden. Bis auf wenige Ausnahmen (z.B. VIS von Thyssen Krupp) ist ein nachträgliches Evakuieren nicht möglich, d.h., bei Beschädigung und Vakuumverlust ist die Dämmwirkung auf ein Minimum herabgesetzt, das beispielsweise bei VIPs dem aktuellen gesetzlichen Mindeststandards in Deutschland entspricht (bei VIG bedeutet ein Vakuumverlust nahezu den kompletten Verlust der Dämmwirkung).

Die angestrebte Lebensdauer von Vakuumdämmungen von mindestens 20 bis 50 Jahren soll dem Nutzungszeitraum von Gebäuden entsprechen. Um die VIPs vor Beschädigung zu schützen, werden sie zum Teil in (Fertig-) Bauelemente integriert. Ein nachträgliches Auswechseln bei Vakuumverlust, sowie die Kontrolle der Funktionsfähigkeit der Dämmwirkung, ist dadurch aber relativ aufwendig und - neben den hohen Kosten - mit entscheidend für die geringe Verbreitung dieser Technik.

US 2010/0330310A1 offenbart alle Merkmale des Oberbegriffs des Anspruchs 1.

Es ist Aufgabe der Erfindung, mit einem geringst möglichen Einsatz an Ressourcen ein System bereit zu stellen, welches eine Nutzung der Vakuum-Eigenschaften im Bausektor auf besonders einfache Weise ermöglicht. Insbesondere soll bei weitgehender Wärmebrückenfreiheit z.B. eine Gebäudehülle auch nachträglich vor Ort zu geringst möglichen Kosten gedämmt werden können und bei Veränderungen der Gebäudehülle diese Dämmung flexibel anpassbar sein.

Diese Aufgabe wird erfindungsgemäß dadurch gelöst dass die Kammer der Rahmenstruktur ein Vakuum enthält, das einen höheren Druck als das des Hohlraums hat.

Die Erfindung geht dabei von der Überlegung aus, dass eine Einsparung von Ressourcen dadurch erreicht werden könnte, dass die Nutzung der Vakuumtechnik nicht in fertig produzierten, evtl. sperrigen Bauteilen Anwendung finden sollte, sondern in vor Ort zusammensetzbaren und evakuierbaren Bauelementen wie z.B. Paneelen erfolgen sollte. Derartige Bauelemente können flexibel vor Ort zu hervorragend stabilen und hochgradig dämmenden Elementen beliebiger Größe zusammengesetzt werden. Dies ist erreichbar, indem die Bauelemente einen Sandwichquerschnitt haben. Sandwichquerschnitte sind Verbundquerschnitte. Sie bestehen aus einem mäßig schubsteifen Kern, der mit zwei außenliegenden dehnsteifen Deckschichten schub- und zugfest verbunden ist. Die Deckschichten können jeweils biegesteif sein. Die Schichten genügen jede für sich der Anforderung an die Ebenheit des Querschnittes, der Gesamtquerschnitt jedoch nicht.

Im Unterschied zu den bekannten Sandwich-Bauweisen muss die Kernstruktur der für eine Anwendung im Vakuumbereich jedoch ganzflächig ohne große Strömungs-Widerstände evakuierbar sein und auch ohne Verklebung mit den Deckschichten im evakuierten Zustand dem atmosphärischen Druck standhalten.

Dies ist erreichbar durch zwei parallel zueinander angeordnete Deckschichten und eine zwischen diesen eingebrachte geschlossene Rahmenstruktur, wobei Deckschichten und Rahmenstruktur getrennte Bauteile sind und derart aneinander angeformt werden, das ein gasdichter Hohlraum entsteht, der dann evakuiert werden kann. Dies kann durch eine Vakuumpumpe, die durch einen Anschluss in einer der Deckschichten oder in der Rahmenstruktur mit dem Bauelement verbunden wird und einen entsprechenden Unterdruck im Hohlraum erzeugt, erreicht werden. Hierbei ist es unerheblich, ob sowohl Rahmenstruktur als auch Deckschichten feste Bauteile in Form von Streben und Platten sind, oder ob Rahmenstruktur und/oder Deckschichten flexibel sind und an das jeweils andere Bauteil angeformt werden. Kriterium ist, dass das Bauteil nach dem Zusammenfügen so dicht ist, dass nach der Evakuierung auf den zu erzielenden Enddruck (bzw. niedriger) der dauerhafte Betrieb einer Vakuumpumpe nicht mehr notwendig ist. Der atmosphärische Druck sorgt dann in jedem Fall für eine dauerhafte kraftschlüssige Verbindung zwischen Deckschichten und Rahmenstruktur.

Es bestehen vielfältige Möglichkeiten der vakuumdichten Ausgestaltung der Ränder bei der Erfindung. Die geschlossene Rahmenstruktur muss als Randabdichtung so ausgeführt werden, dass sie dem atmosphärischen Druck, der auf den Rand wirkt, Stand halten kann. Eine mit den Deckschichten verklebte vakuumdichte Folie oder ein geeignetes Elastomer können diese Aufgabe übernehmen, wenn sie von einem Gitter, welches die Kernstruktur zu den Rändern hin umgibt, gegen den atmosphärischen Druck hin abgestützt werden.

Eine weitere Möglichkeit besteht darin, eine biegesteife Platte an den beiden Längsseiten mit Elastomerdichtungen so zu versehen, dass die Endhöhe dieser Platte inklusive der Dichtungen ein leichtes Übermaß gegenüber der Kernstruktur hat und die Breite der Auflagefläche zu den Deckschichten hin so bemessen ist, dass die Platte nicht kippt (ähnlich einem Doppel-T-Träger). Durch Evakuieren werden die Elastomerdichtungen so komprimiert, dass das Übermaß bei Enddruck auf das Maß der Kernschicht reduziert ist und das entstehende Bauelement am Rand nicht mehr überhöht ist.

Um zusätzliche Sicherheit gegen Vakuumverlust zu erreichen, wird die Randabdichtung nach der Evakuierung mit einer weiteren Sperrschicht versehen. Dazu weist die Rahmenstruktur eine Kammer auf, die ein Vakuum enthält, das einen höheren Druck als das des Hohlraums hat. Bestimmend für die Leckrate (Vakuumverlust) aus dem Hohlraum ist nämlich u.a. der Druckunterschied zwischen dem Vakuum und der Atmosphäre außerhalb des Vakuums. Soll im Hohlraum des Bauelements ein Hochvakuum erreicht werden, bei dem es auf die Anzahl der Restmoleküle ankommt, so kann dieses deutlich leichter aufrecht erhalten werden, wenn sein Volumen im Verhältnis zu seiner Hüllfläche groß ist und insbesondere diese Hüllfläche durch ein Vorvakuum geschützt wird. Dazu kann die Kammer beispielsweise mit entsprechenden Verbindungskanälen zu den Übergangsbereiche zwischen Hohlraum und Außenbereich versehen werden. Das Vorvakuum, in dem viskose Strömung vorliegt, ist mit relativ einfachen Vakuumpumpen herstellbar und kann leicht aufrecht erhalten werden. Durch die 2-stufige Ausführung des Vakuums können z.B. flexible Randabdichtungen aus EPDM verwendet werden, auch die Anforderungen an die Deckschichten werden geringer.

Die beschriebene Anordnung ermöglicht insbesondere auch eine Hochvakuumdämmung. Es können auch weitere Kammern vorgesehen werden, so dass ein mehrstufiges Vakuumsystem entsteht, bei dem mehrere Vakuum-Vorkammern eine Hochvakuumkammer zumindest in den Randbereichen oder auch komplett umgeben. Wenn eine Hochvakuumkammer mit molekularer Strömung von atmosphärischem Druck umgeben ist, so sind die Anforderungen an die Hülle extrem hoch. Je nach Permeabilität der Hülle werden immer neue Moleküle von außen in die Hochvakuumkammer "hereingedrückt" und müssen z.B. durch eine Turbomolekularpumpe oder durch geeignete Getter wieder entfernt werden. Dieser Vorgang ist ungleich aufwändiger, als das Aufrechterhalten eines Grobvakuums von z.B. 1 mbar Restdruck, in dem viskose Strömung vorliegt.

Die Leckrate von Vakuumsystemen wird durch die Druckunterschiede zwischen einer Vakuumkammer und der Umgebung bestimmt. Besteht ein Druckunterschied von 1000 mbar, so ist die Leckrate 1000 mal höher, als das bei einem Druckunterschied von 1 mbar der Fall wäre. Dies bedeutet, dass durch Herabsetzen des Umgebungsdrucks auf ein Grobvakuum die Hochvakuumkammer großflächig durch z.B. Elastomer-Dichtungen geschützt werden kann, die deutlich anpassungsfähiger sind, als z.B. Metalldichtungen. Zusätzlich bieten sie den Vorteil der Wiederverwendbarkeit, der geringen Wärmeleitfähigkeit und der Flexibilität bei unterschiedlicher Materialausdehnung der verbauten und durch die Dichtung verbundenen Elemente.

Ein weiterer Vorteil ergibt sich dadurch, dass eine vergleichsweise teure Hochvakuumpumpe nicht ständig an das System angeschlossen sein muss. Es ist ausreichend, wenn eine Vakuumpumpe, die einen Restdruck von z.B. 1 mbar auch über längere Entfernungen wirtschaftlich aufrecht erhalten kann, in das System eingebunden ist. Für die Hochvakuumkammer ist es sinnvoll, wenn in geeigneten Abständen Anschlüsse für eine Hochvakuumpumpe vorgesehen werden, über die die Kammer evakuiert bzw. nachevakuiert werden kann.

Um die verbleibende Wärmeleitung über das notwendige Stützgerüst zu minimieren, ist es ebenfalls vorteilhaft, einen mehrschichtigen Aufbau zu wählen. Werden die äußeren Schichten nach der beschriebenen Art als evakuierbares Sandwich-Bauelement ausgebildet, so ist deren Stabilität so hoch, dass der atmosphärische Druck mit einer deutlich geringeren Anzahl an Stützen in der mittleren Hochvakuumkammer abgefangen werden kann. Dies hat eine weitere deutliche Reduzierung des Wärmedurchgangs zur Folge.

In vorteilhafter Ausgestaltung ist zwischen den Deckschichten ein Distanzelement angeordnet. Ein oder mehrere derartige Distanzelemente stabilisieren die Deckschichten gerade bei großflächigeren Bauelementen, so dass diese bei der Evakuierung unter dem atmosphärischen Druck nicht kollabieren. Dadurch, dass die Last des atmosphärischen Drucks auf die Deckschichten von einem oder mehreren Distanzelementen als Kernstruktur übernommen wird und diese somit auch die für die Stabilität des Bauelements entscheidend ist, kann die Rahmenstruktur, die die Randabdichtung bildet, unabhängiger hinsichtlich der Vermeidung eines Vakuumverlust optimiert werden.

Eine besonders einfache Bauweise ergibt sich, indem das Distanzelement vorteilhafterweise stabförmig ausgebildet ist und sich senkrecht zur Deckschichtoberfläche erstreckt. Die als Stützen ausgebildeten Distanzelemente können dabei einen beliebigen, z.b. kreis- oder rechteckförmigen Querschnitt haben.

In vorteilhafter Ausgestaltung weist das jeweilige Distanzelement an seinen den Deckschichten zugewandten Seiten sich verdickende Bereiche auf. Dadurch wird eine größere Auflagefläche an den Enden ermöglicht, so dass die zu den Deckschichten senkrechte Positionierung stabilisiert und ein Abknicken vermieden wird.

Vorteilhafterweise ist eine Mehrzahl von Distanzelementen gitterartig untereinander verbunden. Dies ermöglicht eine schnelle Montage mehrerer Distanzelemente, da nicht jedes Element einzeln angeordnet werden muss, sondern eine Mehrzahl von Distanzelementen schnell in standardisierter Weise angeordnet werden können. Gleichzeitig wird die Position der Distanzelemente schon bei der Anordnung, aber insbesondere auch bei der Evakuierung stabilisiert. Schließlich ermöglicht eine gitterartige Verbindung einen besonders platzsparenden Transport: Mehrere Gitter können versetzt ineinander gestapelt werden. Sie können auch mit entsprechenden Scharnieren ausgestattet werden, so dass ein Zusammenschieben der Gitterstruktur möglich ist.

Eine vorteilhafte Ausführungsform dieser gitterartigen Verbindung sind Fachwerk- oder Gitterbinder, die z.B. sehr rationell im Kunststoffspritzguss- oder im Metalldruckgussverfahren hergestellt werden können. Im Gegensatz zu den bekannten Varianten von Gitterträgern, die bereits im Bauwesen Verwendung finden, stellt die Produktion der Knoten, die die Stäbe miteinander verbinden, hier keine zusätzlichen Arbeitsschritte dar. Die Anforderungen an den Formenbau und die Maschinen zur Produktion dieser Elemente ist ebenfalls im Vergleich zur Produktion massiver, großflächiger Elemente sehr gering, da z.B. die Abkühlzeiten durch den minimalen und gleichmäßigen Materialeinsatz sehr kurz gehalten werden können.

Diese Fachwerk- oder Gitterbinder können mit beliebigen Radien hergestellt werden und als formgebende Struktur dienen. Somit sind, z.B. mit Standardblechen von der Rolle, einfach gekrümmte Bauteile herstellbar, für die keine weiteren technischen Einrichtungen vorgehalten werden müssen. Vergleicht man den Aufwand, der notwendig ist, um das gleiche Ziel mit einer Leichtbau-Wabenplatte zu erreichen, wird das kostensenkende Potenzial dieser Bauweise deutlich. Ein weiteres Beispiel für den Vorteil gegenüber dem Stand der Technik ist der Vergleich mit Rundschalungen für den Betonbau. Der Materialaufwand für diese Spezialschalungen ist so hoch, dass schon die Handhabung der einzelnen Elemente eine logistische Herausforderung darstellt.

Besonders vorteilhaft ist die Kombination von formgebenden Elementen (z.B. die angesprochenen Fachwerk- oder Gitterbinder) mit mittig ("auf halber Höhe") verbundenen Abstandhaltern. Abstandhalter, die so miteinander verbunden sind, passen sich unterschiedlichen Radien problemlos an und reduzieren den Bedarf an formgebenden Elementen. Das verringert die benötigte Anzahl an Formen für die Produktion der formgebenden Elemente ebenso, wie die Lagerhaltung der dieser Spezialteile.

Weiterhin ist in vorteilhafter Ausgestaltung ein Verbindemittel zwischen den Deckschichten und der Rahmenstruktur und/oder den Platten und dem jeweiligen Distanzelement eingebracht. Dadurch wird eine Stabilisierung der Struktur auch bei Verlust des Vakuums durch Leckage oder Beschädigung erreicht. Das Verbindemittel kann auch so stark bemessen sein, dass eine dauerhafte Stabilität ohne Vakuum erreicht wird.

In weiterer vorteilhafter Ausgestaltung umfasst das Verbindemittel dabei eine Klebeverbindung. Diese ist technisch besonders einfach zu realisieren. Vorteilhafterweise kommt hier ein thermoplastische Kleber zur Anwendung, so dass durch Erwärmen der Klebestelle die Verklebung zerstörungsfrei rückgängig gemacht werden kann.

In weiterer oder alternativer vorteilhafter Ausgestaltung umfasst das Verbindemittel eine mechanisch trennbare Verbindung. Denkbar sind hier z.B. Klettverschluss, Druckknöpfe, Schnappverschluss o.ä., die zwischen den jeweiligen Schichten verklebt werden können. Diese mechanisch trennbare Verbindung kann vor der endgültigen Verbindung bereits entweder mit der Rahmenstruktur bzw. den Distanzelementen oder einer der Deckschichten verbunden sein. Durch die endgültige Verbindung im Vakuum unter dem atmosphärischen Druck wird gewährleistet, dass der Einbau der Verbindung spannungsfrei erfolgt. Eine mechanisch trennbare Verbindung hat den Vorteil, dass Deckschichten nach einem Druckausgleich mit der Umgebung zerstörungsfrei ausgetauscht werden können, gleichzeitig ist gewährleistet, dass sich die Deckschichten nicht von der Kernstruktur (Rahmenstruktur und/oder Distanzelemente) lösen, wenn ein Vakuumverlust eintritt. Da die meisten Kleber nicht besonders schälfest sind, kann z.B. ein Klettband von einer Deckplatte abgeschält werden. Das erleichtert die Wiederverwendung der verbauten Materialien und sorgt für ein einfacheres, sortenreines Recycling.

Vorteilhafterweise ist ein den Haftreibungskoeffizient erhöhendes Material zwischen den Deckschichten und der Rahmenstruktur und/oder den Platten und dem jeweiligen Distanzelement eingebracht. Hier kann z.B. ein Elastomer zur Anwendung kommen. Der Kraftschluss durch den atmosphärischen Druck nach der Evakuierung des Hohlraums wird dadurch verbessert und die Stabilität erhöht.

Weiterhin ist vorteilhafterweise ein Material zwischen den Deckschichten und der Rahmenstruktur und/oder den Deckschichten und dem jeweiligen Distanzelement eingebracht, das den Haftreibungskoeffizient unter Druckeinwirkung erhöht. Dadurch wird der Kraftschluss nur bei Druckeinwirkung erhöht und bei nur leicht evakuiertem Hohlraum ist ein Positionieren der Deckschichten möglich. Beispielsweise kann eine Schicht mit einem niedrigen Reibungswiderstand (z.B. Teflon) eingefügt sein, die wie erläutert bei leichtem Unterdruck ein leichteres Positionieren der einzelnen Schichten ermöglicht, und die derart angeordnet ist, dass sie bei einem starken Unterdruck weggedrückt wird und somit unwirksam wird. Hier könnte z.B. ein Elastomer, das auf einer Seite eingeschnitten ist und auf dieser Seite mit Teflon o.ä. beschichtet ist, zur Anwendung kommen. Bei höherem Druck auf diese Schicht knickt das Elastomer um und der höhere Reibungswiderstand des Elastomers kommt zur Wirkung.

Vorteilhafterweise sind die Deckschichten gekrümmt. Durch die Krümmung wird bei gleichem Materialeinsatz die Stabilität erhöht, bzw. bei geringerem Materialeinsatz die gleiche Stabilität erreicht, wie ohne Krümmung. Insbesondere die Anzahl der benötigten Abstandhalter reduziert sich und ermöglicht eine leichtere Evakuierbarkeit der Kernkonstruktion. Ebenfalls erhöht sich der Spielraum für zusätzliche Einbauten, da weniger Distanzelemente Volumen verbrauchen. In weiterer vorteilhafter Ausgestaltung können die Deckschichten auch mehrfach gekrümmt sein. Die Stabilität mehrfach gekrümmter Strukturen ist der von einfach gekrümmten Strukturen nochmals deutlich überlegen und die Reduzierung des Materialeinsatzes und der Distanzelemente kann noch stärker ausfallen.

Wird ein Bauelement größeren Ausmaßes hergestellt, so kann es sinnvoll sein, den Hohlraum in mehrere Abschnitte zu unterteilen. Dazu weist der Hohlraum vorteilhafterweise eine gasdichte Trennwand auf. Kleine Abschnitte in einem großen Körper hingegen sind von Vorteil, wenn es um den Erhalt des Vakuums geht. Wird z.B. die Deckschicht verletzt, so geht das Vakuum nur in einem kleinen Teilbereich verloren. Die restlichen Bereiche behalten ihre dämmenden Eigenschaften und ihre Stabilität aber weiter bei.

Allerdings ist während des Vorgangs der Evakuierung ein einheitlicher Hohlraum, der möglichst ohne größere Strömungswiderstände im Inneren ausgebildet ist, von Vorteil. Dadurch ist die Anzahl der benötigten Anschlüsse für eine Vakuumpumpe niedriger und es kann auf zusätzliche Vakuumleitungen außerhalb des zu evakuierenden Hohlraums verzichtet werden. Soll ein Hochvakuum erzielt werden, ist ein großer Hohlraum wegen der fehlenden Vorzugsrichtung der molekularen Strömung unter Umständen die einzige Alternative zum Einsatz mehrerer Vakuumpumpen, bzw. zum mehrfachen Umsetzen der Vakuumpumpe. Daher sollte die Unterteilung reversibel sein, d.h. die jeweilige Trennwand weist eine gasdicht verschließbare Öffnung auf. Die Öffnungen sind so ausgestaltet, dass sie im Normalfall während der Nutzung geschlossen sind, zur Kontrolle der Güte des Vakuums und zum Nachevakuieren aber geöffnet werden können. Die Ausführung dieser Abdichtungen (Anmerkung: ähnliches Prinzip wie Schleusen in z.B. U-Booten) kann z.B. in der Art von durch Verschieben oder durch Drehen verschließbaren Lüftungselementen aus dem Bauwesen erfolgen, wobei darauf zu achten ist, dass die Abdichtungen im evakuierten Zustand der Elemente beidseitig dem atmosphärischen Druck Stand halten können. Wird eine Deckschicht an einer Stelle beschädigt, so wird nur die von den umgebenden Abdichtungen gebildete Vakuumeinheit unwirksam, die angrenzenden Einheiten bleiben zumindest in ihrer Stabilität uneingeschränkt wirksam, je nach Anforderung und technischem Aufwand für die Abdichtung kann die Wirksamkeit bis zum Erhalt eines Hochvakuums gewährleistet werden.

Im Falle einer Beschädigung wird der Druckunterschied zwischen den evakuierten Bereichen und dem atmosphärischen Druck in dem beschädigten Bereich ein Öffnen der Abdichtungen in den meisten Fällen unmöglich machen. Um nach einer Reparatur der Deckschicht die Funktionsfähigkeit des gesamten Elements ohne einen zusätzlichen Anschluss für eine Vakuumpumpe in dem reparierten Bereich wieder herzustellen, ist es sinnvoll, Bypässe zwischen den einzelnen Bereichen vorzusehen, die für einen Druckausgleich sorgen können und im Normalfall immer geschlossen sind. Diese Bypässe können im Querschnitt sehr gering sein und mit geringem konstruktiven Aufwand hergestellt werden und stellen lediglich ein Notfallsystem dar. Das anschließende Evakuieren des gesamten Elements auf den gewünschten Enddruck soll vorzugsweise wieder über die geöffneten Abdichtungen erfolgen, um die Strömungswiderstände und somit die Evakuierungszeit möglichst gering zu halten.

In weiterer vorteilhafter Ausgestaltung ist zwischen den Deckschichten ein poröses Material, insbesondere ein rieselfähiges, druckfestes Material angeordnet. Besonders in industriellen Anwendungen ist die Verwendung von z.B Mineralwolle zur Wärmedämmung und als Brandschutzschicht besonders geeignet.

Der Einsatz von VIPs findet derzeit kaum statt, obwohl der Wärmedurchlass durch eine Vakuumdämmung erheblich reduziert werden könnte. Lediglich in der Kryo-Technik haben sich Vakuumdämmsysteme etabliert. Gründe für die fehlende Verbreitung sind die schwierige Handhabung der bislang erhältlichen empfindlichen VIPs, die fehlende Feuerfestigkeit der Hülle, die fehlende Anpassbarkeit an vorhandene Rohre, Behälter, Anschlüsse etc., sowie die rechtlichen Rahmenbedingungen (Vorschriften) und der Mangel an geschultem Personal für Planung und Ausführung der Vakuumdämmung.

Für die industriellen, aber auch für andere Anwendungen bietet das beschriebene Bauelement die Möglichkeit zur zusätzlichen, hochgradig effektiven Wärmedämmung bei vergleichsweise minimalen zusätzlichen Kosten gegenüber dem Stand der Technik. Die Dämmstärken werden besonders in der Industrie nach Wirtschaftlichkeit bemessen. Diese Berechnungen beinhalten auch den zusätzlichen Platzbedarf, der für eine Erhöhung der Dämmstärke benötigt wird und in bestehenden Anlagen oft gar nicht bereitgestellt werden kann.

Nach der beschriebenen Art kann bei der Dämmung von Rohren z.B. eine evakuierbare Kernstruktur mit einer inneren Abdeckung aus Lochblech (o.a. evakuierbaren Deckschichten) und einer äußeren vakuumdichten Deckschicht als äußerer Ersatz für die übliche Blechschale um die Mineralwollschicht dienen. Wird diese äußere Hülle an den Enden vakuumdicht mit dem Rohr verbunden, so kann dieses Rohrstück mit einem Vakuum mit einem Restdruck von z.B. 0,1 mbar versehen werden. In diesem Bereich liegt in der äußeren Kernschicht noch viskose Strömung vor, in der Mineralwolle aber ist bei diesem niedrigen Restdruck die freie Weglänge der Moleküle bereits größer als die Porengröße. Somit wird in der Mineralwollschicht die Wärmeleitung über das Gas unterbunden und die Dämmwirkung der Mineralwolle erhöht sich auf ein mehrfaches gegenüber dem nicht evakuierten Zustand. Besonders bei industriellen Anwendungen und in Kraftwerksprozessen mit Temperaturunterschieden von teilweise mehreren 100°C kann durch diese zusätzliche Maßnahme eine erhebliche Energieeinsparung erzielt werden, ohne grundlegend andere Materialien mit unbekannten Eigenschaften zu verwenden. Da die natürliche Dämmwirkung der Mineralwolle auch bei Vakuumverlust erhalten bleibt, ist der - je nach Pumpengröße und Dicke der Mineralwollschicht - relativ lange Evakuierungszeitraum, der sich durch die Strömungswiderstände in der Mineralwollschicht ergibt, kein Hinderungsgrund für den Einsatz der Erfindung. Der Schutz der Materialien innerhalb der Hülle, z.B. vor Durchfeuchtung und Korrosion, ist ein Zusatznutzen dieser Methode.

Nach dem gleichen erfindungsgemäßen Prinzip können z.B. auch wärme- und schalldämmende Feuerschutzwände gebaut werden. Auf eine evakuierbare Kernstruktur mit beidseitig angebrachten Lochblechen werden Mineralwollschichten mit anschließenden vakuumdichten Deckschichten angebracht und anschließend evakuiert. Die Dicke der Wand reduziert sich durch diesen Prozess, wenn keine Abstandhalter für einen klar definierten Abstand zwischen Deckschicht und Kernschicht sorgen, da die Mineralwolle durch den atmosphärischen Druck komprimiert wird.

Eine derartige Ausgestaltung mit Lochblech kann insbesondere von Vorteil sein bei der Verwendung eines Bauelements, bei der abzusehen ist, dass die Deckschichten im Laufe des Einsatzes öfter zu wechseln sind. Hier kann das Lochblech auch als engmaschiges Gitter ausgebildet sein. Dieses kann zur Deckschicht hin so ausgebildet sein, dass z.B. eine Vielzahl kleiner Elastomerpunkte oder -streifen für eine evakuierbare Schicht zwischen Gitter und Deckschicht sorgen, ohne hohe Punktlasten auf die Deckschicht hervorzurufen.

Bei einer geplanten Verfüllung des äußeren Elements ist es sinnvoll, ein weitgehend (staub-) dichtes, aber dennoch luftdurchlässiges Vlies, auf der dem Hohlraum zugewandten Seite des Gitters (Lochblechs) vorzusehen.

Die genannte Methode kann je nach Anforderung und Einsatzzweck selbstverständlich auch mit anderen offenporigen Dämmmaterialien (dann teilweise ohne vergleichbare Brandschutzfunktion) kombiniert werden. Alternativ kann z.B. der Hohlraum mit einem rieselfähigen Material, welches druckstabil und nicht komprimierbar ist, verfüllt werden. Ebenso kann des entstandene Element als verlorene Schalung für Beton oder andere flüssig einzubringende, sich verfestigende Materialien dienen, auch das Ausschäumen des fertigen Bauelements ist möglich.

Besonders bevorzugt ist dies, wenn ein festes Element produziert werden soll, das durchgängig druckfest ist. Die Anforderungen sowohl an die ursprüngliche Kernstruktur (die dann z.B. die Aufgabe einer Bewehrung übernimmt), als auch an die Deckschicht (die dünner sein kann) wird herabgesetzt. Auf die Deckschicht einwirkende Punktlasten, wie sie ohne Füllmaterial schon durch den atmosphärischen Druck entstehen, werden vermieden.

Bei einem mehrschichtigen Aufbau eines Vakuumdämmelements kann durch Verfüllung einer vorzugsweise äußeren Schicht die Masse des Bauteils deutlich erhöht werden. Besonders im Gebäudebereich kann eine massive Bauweise zur Erzielung von Lärmminderung, aber auch von thermischer Speichermasse gefordert werden. Zwar ist im Vakuum (niedriger Restdruck) die Ausbreitung von Schallwellen unterbunden, dennoch kann über die Stützkonstruktion weiterhin Körperschall übertragen werden - was besonders bei leichten Bauweisen ein erhebliches Problem darstellen kann.

Eine einfache Variante besonders für temporäre Bauwerke ist die Verfüllung der äußeren Elemente mit Sand. Dieser hat eine hohe Dichte, ist hochgradig rieselfähig und lokal fast überall verfügbar. Somit müssen für z.B. temporäre Lärmschutzwände nur die "Leichtbauteile" und das Zubehör zum Erstellen (u.a. Vakuumpumpe) bevorratet und angeliefert werden, Sand hingegen stellt im Allgemeinen keine besonderen Herausforderungen an die Logistik.

In weiterer vorteilhafter Ausgestaltung ist im Hohlraum und/oder der Kammer ein mit dem Außenbereich verbundenes Rohr angeordnet, d.h. ein Rohr führt durch die evakuierten Bereiche, wobei die jeweiligen offenen Enden des Rohres mit dem Außenbereich verbunden sind. Dadurch können Versorgungsleitungen in einfacher Weise isoliert werden. Dadurch ist es auch möglich, im Gegensatz zur bisher üblichen Einzeldämmung von Rohren (teilweise werden auch vorgefertigte Versorgungsleitungen angeboten, bei denen z.B. Vor- und Rücklauf gemeinsam mit einer Dämmung versehen sind), mehrere Leitungen mit unterschiedlichen Temperaturniveaus gemeinsam so zu dämmen, dass das Ergebnis bei niedrigeren Kosten deutlich besser wird, als bei Dämmmaßnahmen nach dem Stand der Technik.

Für das Erzielen einer Dämmung durch das Vakuum, die durch Unterbindung der Konvektion wirkt und somit bereits der Dämmwirkung sehr guter Dämmstoffe entspricht, kann eine gemeinsame äußere Hülle die Rohre umfassen. Diese Hülle kann nach der beschriebenen mit einer evakuierbaren Rahmenstruktur und zwei Deckschichten vor Ort angepasst und ausgeführt werden und muss wenigstens auf der den Rohren zugewandten Seite kraftschlüssig verklebt werden (wenn in der Hülle ein höherer Druck vorliegt, als in dem Bereich, der von der Hülle umgeben wird, löst sich sonst diese Schicht und wird von dem Restdruck in Richtung Rohre gedrückt). Anschließend kann der Bereich, in dem sich die Rohre befinden, auf z.B. 1 mbar evakuiert werden. Da die Strahlung durch das Vakuum nicht unterbunden wird, ist es sinnvoll, die Rohre mit einer im Wärmestrahlungsbereich stark reflektierenden Schicht zu versehen und eventuell zusätzliche reflektierende Schichten (z.B. MLIs) zwischen den Rohren anzubringen.

Durch die hohe Eigenstabilität der Hülle ist die Anzahl der benötigten inneren Verstrebung der gesamten Konstruktion zum Schutz gegen Beulen oder knicken durch die Last des atmosphärischen Drucks relativ gering, bzw. bei einer zylindrischen Ausführung der Hülle gleich Null. Benötigte Verstrebungen sind sinnvollerweise als Befestigungsmöglichkeit für die Aufhängung für die Rohre auszuführen, um den Materialbedarf niedrig zu halten und die Wärmeleitung über die Rohrhalterungen zu minimieren.

Werden höhere Ansprüche an die Dämmung gestellt, so ist es sinnvoll, die Rohre einzeln, bzw. auch zu mehreren (bei vergleichbarem Temperaturniveau) mit einer eigenen Grobvakuumdämmschicht in der beschriebenen Art inklusive reflektierender Schichten zu versehen und anschließend mit einer gemeinsamen Hülle, wie sie oben beschrieben ist, zu umgeben. Der Bereich zwischen den Rohren kann anschließend bis auf ein Hochvakuum evakuiert werden und bietet somit die bestmögliche Wärmedämmung für die Versorgungsleitungen.

Generell ist es sinnvoll, analog zu Leerrohren im Bauwesen, für nachträglich zu integrierende Rohre bereits Leerrohre vorzusehen, die ebenfalls evakuiert werden. Wird dann ein Rohr zusätzlich eingebracht, kann dieses Leerrohr belüftet werden und das Rohr eingefügt werden. Anschließend wird der Zwischenraum zwischen Rohr und Leerrohr wieder evakuiert. Für elektrische Leitungen kann diese Methode ebenfalls angewendet werden. Ein großer Vorteil dieser Methode ist der Schutz der in der Vakuumatmosphäre verbauten Materialien vor Korrosion und Staub, dies wirkt sich besonders auf die reflektierenden Schichten positiv aus, da deren Wirksamkeit im Gegensatz zum Stand der Technik so über die Nutzungsdauer in voller Höhe erhalten bleibt. Natürlich kann auch eine nachträgliche Integration von Rohren in Wände, Decken oder sonstige Elemente erfolgen. Ebenso können auf diese Art z.B. Wärme- und Kältespeicher gemeinsam gedämmt werden.

In weiterer vorteilhafter Ausgestaltung ist in die jeweilige Deckschicht ein Rohr als Wärmetauscher integriert. Zur Nutzung von Niedrigexergie ist es sinnvoll, Heizflächen (gilt ebenfalls für Kühlung) möglichst groß auszuführen. Fußboden- und Wandheizungen sowie Kühldecken haben sich im Bauwesen fest etabliert, da über die Temperierung großer Flächen ein gleichmäßigeres und somit besseres Ergebnis als über kleinere Wärmetauscherelemente erzielbar ist und der Temperaturunterschied zwischen Heizfläche und zu beheizendem Raum (aber auch Gefäß etc.) kleiner gehalten werden kann. Der Wärmeübergang findet somit stärker über Strahlung (bei mit Flüssigkeit gefüllten Gefäßen über Wärmeleitung) als über Konvektion statt und wird vom Menschen als angenehmer empfunden. Ebenso kann bei einem ausgeglichenem Strahlungsklima die Lufttemperatur niedriger gehalten werden, ohne dass die Temperatur als kühler empfunden wird. Das hat deutlich niedrigere Lüftungsverluste zur Folge.

Die Integration von Wärmetauschern kann auch der Sicherheit dienen und eine Alternative zu z.B. direktelektrischen Rohrbegleitheizungen, die vor einem Einfrieren von Versorgungsleitungen schützen, sein.

Wird ein Bauelement nach der beschriebenen Art hergestellt, so ist durch die evakuierbare Kernstruktur im Gegensatz zu Sandwichbauweisen nach dem Stand der Technik (Wabenkern, Schaumkern etc.) die Möglichkeit gegeben, Rohre ohne spanende Verarbeitung der Kernschicht zu integrieren. Dies kann vorzugsweise durch vorkonfektionierte Bleche, die ein Rohr umhüllen und mit einer leichten Biegung nach außen, sowie einer Abkantung, die sich in der Kernstruktur reversibel fixieren lässt, versehen sind, erfolgen. Die leichte Vorspannung in Richtung der äußeren Deckschicht sorgt dafür, dass das Blech beim Evakuieren des Bauteils an die Deckschicht herangedrückt wird und der Wärmeübergang großflächig erfolgen kann. Vorzugsweise sollte das Blech auf der Rückseite mit einer im Wärmestrahlungsbereich stark reflektierenden Schicht versehen sein, um keine Wärmeverluste durch Strahlung (in die falsche Richtung) zu haben. Die thermische Masse ist bei dieser Art Wärmetauscher sehr klein und ermöglicht eine sehr schnelle Regelbarkeit des Temperaturniveaus. Im Gegensatz zu Flächenheizungen nach dem Stand der Technik, die z.B. in einer Estrichschicht verbaut sind und somit ein träges Verhalten aufweisen, lassen sich somit z.B. auch temporär genutzte Räume kurzfristig mit minimalem Energieeinsatz beheizen oder kühlen.

Sind die Bauelemente evakuiert, so ergibt sich bei der Kühlfunktion der weitere Vorteil gegenüber dem Stand der Technik, dass eine Taupunktunterschreitung in der Wand (auf der dem Raum abgewandten Seite) bauphysikalisch unbedenklich ist, da durch das Vakuum keine Feuchtigkeit vorhanden ist, die kondensieren kann.

Durch die geringe Kontaktfläche mit der Kernstruktur ist die Wärmeleitung in die falsche Richtung"ebenfalls so stark minimiert, dass der Nachteil des erhöhten Wärmeverlusts einer Wandheizung nach dem Stand der Technik in Außenwänden faktisch nicht mehr vorhanden ist.

Eine weitere Anwendungsmöglichkeit ergibt sich im Behälterbau. Hier kann mit geringem Energieeinsatz z.B. bei Wasserspeichern gezielt die Eisbildung im Randbereich des Behälters verhindert werden. Wenn sich bei kalten Temperaturen nur in der Mitte des Behälters Eis bildet, so kann dieses Eis frei aufschwimmen, während der Randbereich eisfrei bleibt und nicht durch die Ausdehnung beschädigt wird. Diese Methode eignet sich auch hervorragend als Sicherheitssystem für Salzspeicher in u.a. solarthermischen Kraftwerken, bei denen ein temperaturbedingter Wechsel von der flüssigen zur festen Phase zur Zerstörung des kompletten Speichers und damit zu einem immensen wirtschaftlichen Schaden führt.

Auch an Außenwänden und Dächern die in erfindungsgemäßer Sandwichbauweise hergestellt werden, bieten sich durch die Integration von Wärmetauschern nach der beschriebenen Methode erhebliche Vorteile. So können z.B. opake Oberflächen als Solarabsorber genutzt werden, ebenso als (zusätzlicher) Kollektor für eine Wärmepumpe.

Dachflächen, die in der beschriebenen Art ausgeführt werden, können besonders in klaren Nächten, in denen der Strahlungsausgleich mit dem Nachthimmel für eine Unterkühlung der Dachfläche unter die Umgebungstemperatur sorgt, als Kühlkollektor genutzt werden und erheblich dazu beitragen, die Kühllasten von Gebäuden und technischen Einrichtungen zu senken. Da dafür lediglich der Strom für die Pumpen eingesetzt werden muss, ist diese Lösung in hervorragender Weise geeignet, den Energieverbrauch im Vergleich zum Stand der Technik (Klimaanlagen) zu senken.

Die Integration von Wärmetauschern in Dachflächen, aber auch auf Verkehrsflächen, bietet den weiteren Vorteil, dass mit Niedrigexergie z.B. eine Vereisung dieser Flächen verhindert werden kann, ebenso kann auf schrägen Flächen das Abrutschen von Schnee unterstützt werden. Bei extremen Schneehöhen, die die Statik von Gebäuden gefährden (besonders bei Flachdächern) ergibt sich ebenfalls die Möglichkeit, den Schnee durch Zuführung thermischer Energie abzutauen.

Bezüglich des Verfahrens zur Herstellung eines Bauelements,wobei zwei Deckschichten parallel zueinander angeordnet werden, eine geschlossenen Rahmenstruktur an die Deckschichten angeformt wird, die Rahmenstruktur zwischen den Deckschichten derart angeordnet wird, dass ein gasdichter Hohlraum gebildet wird und der Hohlraum evakuiert wird, wird die Aufgabe dadurch gelöst, dass vor der Evakuierung des Hohlraums eine Kammer der Rahmenstruktur evakuiert wird, wobei die Kammer einen höheren Druck als der Hohlraum aufweist. Diese Herstellmethode bietet den Vorteil, dass Deckschichten und Rahmenstruktur produziert und platzsparend z.B. ineinandergestapelt zum Bauort transportiert werden können. Vor Ort erfolgt dann die Zusammensetzung und Evakuierung.

Dabei wird vor der Evakuierung des Hohlraums eine Kammer der Rahmenstruktur evakuiert, wobei die Kammer einen höheren Druck als der Hohlraum aufweist. Dadurch kann hier ein Vorvakuum erzeugt werden, welches ein leckagearmes Hochvakuum im Hohlraum ermöglicht.

Vorteilhafterweise wird dabei zwischen den Deckschichten ein Distanzelement angeordnet, welches die Stabilität des Bauelements erhöht.

Wenn eine Form für die Produktion von z.B. gebogenen Strukturen bereits vorhanden ist, besteht auch die Möglichkeit, komplett auf formgebende Elemente in dem Bauelement zu verzichten. In vorteilhafter Ausgestaltung werden dabei Deckschichten und Rahmenstruktur an einer Innen- oder Außenform angeordnet. Dieses Verfahren ist besonders bei nicht formgebenden Teilen für Deckschichten und Rahmenstruktur interessant: Eine nicht formgebende Kernstruktur und nicht formgebende Deckschichten werden bündig auf eine Form gelegt und nehmen durch anschließendes Evakuieren diese Form an und behalten diese bei. Die Form ist dabei in weiterer vorteilhafter Ausgestaltung als Vakuumtisch ausgebildet. Somit kann erst die an die Form anliegende Deckschicht durch Evakuieren an die Form angepasst werden und dann anschließend die Rahmenstruktur mit der zweiten Deckschicht an diese Form angepasst werden. Dies ermöglicht auch die Addition weiterer Schichten nach der gleichen Methode.

Im Gegensatz zu anderen Produktionsverfahren für Platten und Elemente können bei der Erfindung die Taktzeiten auf ein Minimum reduziert werden und der Nutzungsgrad von Formen kann stark erhöht werden. Wird z.B. die Form einer evakuierbaren Schicht und einer Oberfläche aus z.B. Lochblech (Lochblech steht stellvertretend für alle Oberflächenschichten, die geeignet sind, bei ausreichender Stabilität genügend Luftdurchlass für die Evakuierung zu ermöglichen) versehen und somit als Vakuumtisch ausgebildet, so kann erst die erste Deckschicht in Form gebracht werden und anschließend die Kernschicht mit der zweiten Deckschicht durch Evakuieren mit der ersten Deckschicht verbunden werden. Nach dem Lösen vom Vakuumtisch sorgt der atmosphärische Druck dafür, dass das Element stabil bleibt und z.B. Klebeschichten ohne weitere Druckvorrichtung aushärten können. Neben dem Vorteil, dass eine einseitige Form ausreichend ist und kein mechanischer Druck ausgeübt werden muss, können durch diese Produktionsmethode die Taktzeiten unabhängig von den Trocknungszeiten von Klebstoffen verringert werden. Ein Einsatz spontan härtender Klebstoffe (z.B. unter UV-Licht, oder durch Zuführung thermischer Energie) zur Verringerung von Taktzeiten ist somit nicht mehr notwendig.

In vorteilhafter Ausgestaltung umfasst ein Gebäude ein beschriebenes Bauelement und/oder ein nach dem beschriebenen Verfahren hergestelltes Bauelement.

Dabei ist ein Mehrzahl von Bauelementen vorteilhafterweise an einer Fachwerkstruktur angebracht. Die Fachwerkstruktur bildet dabei ein Tragegerüst für die statische Stabilität, in das die Bauelemente als Wandelemente eingebracht werden.

In vorteilhafter Ausgestaltung ist die Fachwerkstruktur zumindest teilweise aus Stahl gebildet. Dadurch wird eine stabile Haltekonstruktion erzielt.

Vorteilhafterweise ist mit zumindest einem Hohlraum eine Vakuumpumpe verbunden. Dies sorgt für einen zuverlässigen Erhalt des Vakuums im eingebauten Zustand des Bauelements.

Vorteilhafterweise ist der Innenraum eines Bauteils des Gebäudes vollständig evakuiert. Die Bauweise mit evakuierbaren Hohlkammerprofilen eignet sich nämlich in hervorragender Weise zur Produktion von sehr großvolumigen, eigenstabilen Bauteilen. Werden diese bevorzugt rotationssymetrisch ausgeführt, so ergibt sich die Möglichkeit, diese bei stabiler Form komplett zu evakuieren.

In Abhängigkeit von der Größe des gesamten Bauteils und dem Gewicht der verwendeten Materialien kann somit durch das Evakuieren des Bauteilinhalts eine signifikante Gewichtsminderung erzielt werden, die zur Folge hat, dass das Bauteil zumindest mit erheblich weniger Energieeinsatz bewegt werden kann, bzw. so leicht wird, dass sein Gewicht unter dem der verdrängten Luft liegt.

Beim Bau von Kühltürmen, Aufwindkraftwerken oder anderen rotationssymetrischen Bauwerken kann die Herstellung liegend erfolgen und die gesamte Hülle anschließend in die Senkrechte gebracht werden. Die Verwendung von Kränen und Verschalungen für den Bau wird somit weitgehend vermieden, die Hülle kann je nach Anforderung als verlorene Schalung verwendet werden. Halterungen für das Einfüllen von Beton oder anderen Füllmaterialien können beim Bau integriert werden.

Vorteilhafterweise wird bei einem Verfahren zur Ausrüstung eines Gebäudes ein beschriebenes Bauelement und/oder ein mit dem beschriebenen Verfahren hergestelltes Bauelement, an dem Gebäude angeordnet.

Dieses Verfahren eignet sich auch in hervorragender Weise, um vorhandene Flächen und Körper nachträglich mit einer oder mehreren zusätzlichen Schicht/en zu versehen, d.h. eine am Gebäude bereits vorhandene Struktur bildet vorteilhafterweise eine der Deckschichten. Diese Schichten können, neben der entstehenden neuen Oberfläche, mehrere zusätzliche Aufgaben übernehmen. Eine Anwendungsbereich ist z.B. die dauerhafte Trockenlegung durchfeuchteter Bauteile. Nach z.B. einem Hochwasser werden vielfach Bautrockner mit hohem Strombedarf eingesetzt. Wird statt der Trocknung mittels Bautrockner eine zu trocknende Fläche mit Abstandhaltern, einem vakuumdichten Randverschluss und einer vakuumdichten Deckschicht umschlossen und unter Einsatz einer Vakuumpumpe auf ein Grobvakuum evakuiert, so wird der Siedepunkt des Wassers auf ca. 33°C herabgesetzt. Durch den Druckunterschied zwischen der zu trocknenden Wand, dem Vakuum und der Außenseite der Wand, ergibt sich eine klare Ausrichtung der Strömung zur Vakuumpumpe hin. Ein weitgehend luftdichter Abschluss der Wand zur Außenseite hin ist für diese Methode notwendig, kann aber in den meisten Fällen zumindest nachträglich gewährleistet werden.

Bei Bauwerken, bei denen eine nachträgliche Außendämmung nicht möglich ist (Platzmangel, Denkmalschutz u.a.), kann mit dieser Technik eine Innendämmung ermöglicht werden, die bauphysikalisch unbedenklich ist. Wird die Außenseite mit einer diffusionsdichten Schicht überzogen, und die Innenseite in oben aufgeführter Art ausgeführt, so ergibt sich zusätzlich der Vorteil, dass sich z.B. Schimmelpilze in dem "Vakuumambiente" nicht ausbreiten, bzw. neu bilden können. Da das Vakuum eine lebensfeindliche Umgebung ist, werden somit viele Probleme, die sich in der Vergangenheit bei (nicht sachgemäß ausgeführten) Innendämmungen ergeben haben, bereits im Ansatz vermieden. Auch kontaminierte Gebäude (Schimmel, Ölschäden nach Hochwasser etc.), die ansonsten unbewohnbar wären, können durch die (annähernd) hermetische Versiegelung und das gezielte Abführen der belasteten Luft durch die Vakuumpumpe - mit der anschließenden Möglichkeit der Abscheidung, bzw. Filterung - wieder bewohnbar gemacht werden.

Je nach Anwendung kann es auch vorteilhaft sein, weitere Schichten anzubringen. Wird z.B. ein mit Wasser gefüllter Wärmespeicher gedämmt oder hergestellt, so kann der vorhandene Dampfdruck in einer weiteren Vorkammer reduziert werden. Auch bei z.B. Innenwänden von Häusern kann eine Schicht mit einem leichten Unterdruck appliziert werden und mit einem z.B. akustischen Warnsystem verbunden werden. Wird z.B. eine Wand angebohrt, so kann diese erste Schicht leicht durch eine Dichtung wieder abgedichtet werden, die nächste anliegende Schicht kann z.B. durch eine keramische Oberfläche vor Beschädigung geschützt sein. Die Nachteile, die herkömmliche Vakuumdämmungen durch die Einschränkungen für den Nutzer haben (keine Bilder/Hängeschränke können an den Wänden aufgehängt werden), lassen sich durch geeignete Befestigungsmittel, die die Kräfte in der ersten Unterdruckebene ableiten, vermeiden.

Schließlich umfasst vorteilhafterweise ein Luftfahrzeug einen rotationssymmetrischen Auftriebskörper mit einem beschriebenen Bauelement und/oder mit einem Bauelement, hergestellt mit dem beschriebenen Verfahren, wobei der Innenraum des Auftriebskörpers evakuiert und damit leichter als Luft ist. Bisherige Leichter-als-Luft-Technologien, verwenden hauptsächlich Wasserstoff oder Helium als "Auftriebsmittel". Während Wasserstoff aufgrund der Gefahren im Umgang mit ihm wohl nur in Ausnahmefällen zum Einsatz kommen wird, ist bei Helium die Verfügbarkeit und der Preis ein stark begrenzender Faktor.

Der Druckunterschied, der sich bei einer Evakuierung z.B. eines zylindrischen Bauteils zwischen dem atmosphärischen Druck und dem Bauteilinhalt ergibt, erfordert eine sehr stabile Hüllstruktur. Die Sandwichbauweise, die vorangegangen beschrieben ist, ermöglicht die erforderliche Stabilität.

Ein großer Vorteil gegenüber z.B. Luftschiffen mit herkömmlichen Traggasen ist die Möglichkeit, durch das gezielte Fluten kleinerer abgetrennter Segmente in dem Hohlkörper, ohne die Verwendung von zusätzlichem Ballast für ein schnelles Austarieren und für eine gezielte, schnelle Landung sorgen zu können. Der Druckunterschied, der zum atmosphärischen Druck vorliegt, erleichtert diese Aufgabe. Ebenso geht bei diesem Vorgang kein teures Traggas verloren, es muss lediglich wieder in den gefluteten Bereichen neu evakuiert werden.

Die extrem einfache Bauweise und die hervorragende Recyclingfähigkeit die die Erfindung bietet, macht völlig neue Einsatzzwecke für die Leichter-als-Luft-Technologie möglich. So kann z.B. ein "Luftschiff" gebaut werden, dessen Hülle am Einsatzort als Behausung dient. Gerade bei Katastrophen, wie z.B. Erdbeben, bei denen die komplette Infrastruktur zerstört wird, ist der Transport von Hilfsgütern eine logistische Herausforderung, die kaum bewältigt werden kann. Mit einem solchen "Einweg-Luftschiff" wird das vor Ort benötigte Material selbst zum Transportmittel. Alle Materialien, die zum Bau verwendet werden, können zu 100% einem neuen Einsatzzweck zugeführt werden.

Durch die Verwendung photovoltaisch aktiver Oberflächen kann sogar die zum Bau und Betrieb des "Luftschiffs" benötigte Energie dezentral hergestellt werden. Auch hier können die verwendeten Photovoltaik-Elemente anschließend vor Ort eine Grundversorgung gewährleisten.

Die mit der Erfindung erzielten Vorteile bestehen insbesondere darin, dass durch die Nutzung eines Bauelements mit einer vakuumbasierten Sandwichstruktur eine besonders leichte und wärmedämmende Errichtung eines Gebäudes mit geringem Konstruktionsaufwand ermöglicht wird. Dies wird insbesondere durch die Nutzung der positiven Eigenschaften des Vakuums erreicht: So sorgt die Druckdifferenz zwischen Atmosphäre und Vakuum für eine Stabilisierung des Bauelements durch Kraftschluss mit einem Druck von 1 kg/cm². Durch die Evakuierung ergibt sich auch eine Gewichtsersparnis von 1,2 kg/m³.

Die modulare Bauweise mit einer Zusammensetzung des Bauteils vor Ort, d.h. an der Baustelle und nicht an der Produktionsstätte bietet weiterhin den Vorteil, dass Bauelemente mit einer oder mehreren empfindlichen Oberflächen in Einzelteilen zum Ort des Einbaus oder der Aufstellung transportiert werden können. Die endgültige Anbringung der "Sichtflächen" kann dann zum Abschluss aller anderen Arbeiten erfolgen - das Risiko einer Beschädigung ist minimiert.

Weiterer Vorteil ist, dass die Sichtflächen (aber auch andere Teile des Bauelements) - je nach Art der Befestigung - leicht ausgetauscht werden können. Eine optische Veränderung kann somit auf einfache Art und Weise realisiert werden und ist lediglich auf die austauschbare Sichtfläche beschränkt, alle weiteren Teile des Bauelements können unverändert beibehalten werden. Im Gegensatz zu z.B. Neulackierung einer Sichtfläche ergeben sich durch den Austausch erhebliche Zeitvorteile, da die Vorbereitung des Untergrunds, sowie Trocknungszeiten von Farben wegfallen. Die Abhängigkeit von geeigneten Witterungsbedingungen sinkt erheblich. Insgesamt ist der Austausch und das Recycling einer dünnwandigen Sichtfläche auch aus energetischen Gründen einer aufwändigen Bearbeitung vorzuziehen.

Weiterhin ist das Bauelement hochgradig wärmeisolierend: Die drei Wärmeübertragungsarten sind Wärmeleitung, Konvektion und Strahlung. Bereits durch ein Grobvakuum wird Konvektion unterbunden; durch ein Hochvakuum sogar die Wärmeleitung über das Gas unterbunden. Wird ein entsprechend poröses Material für die Oberflächen verwendet, kann auch eine molekulare Strömung erreicht werden, so dass die Wärmeleitung über das Gas auch oberhalb eines Hochvakuums unterbunden wird. Die Wärmeleitung von Luft liegt bei 20°C bei ca. 0,0262 W/mK und erhöht sich bei 400°C auf ca. 0,040 W/mK. Die Wärmeleitung von Luft ist somit geringer bis deutlich geringer, als die der meisten kommerziell verfügbaren Dämmstoffe und zeichnet sich ebenfalls durch eine niedrigere Temperaturabhängigkeit aus. Die Wärmestrahlung wird im Gegensatz zu Dämmstoffen nicht eingeschränkt, kann aber z.B. über einzelne reflektierende Schichten bis hin zu MLIs (multi-layer-insulation) verringert bis nahezu unterbunden werden. Die Wärmeleitung über die notwendige Kernstruktur für z.B. evakuierte Sandwichpaneele ist zu berücksichtigen und abhängig von der Art des verwendeten Materials und dem flächenmäßigem Anteil, den diese Kernstruktur an dem fertigen Element hat. Durch ein "thermisches Entkoppeln", z.B. über Elastomere am Übergang Deckschichten zu Kernschicht, lassen sich weitere Wärmeübergangswiderstände erzielen, die den Gesamtenergiedurchlass weiter herabsetzen.

Somit kann bei dickeren evakuierten Bauteilen bereits durch ein Grobvakuum, welches sich mit relativ einfachen Vakuumpumpen herstellen lässt, eine hervorragende Wärmedämmung erreicht werden, die, trotz des Verzichts auf kommerziell erhältliche Dämmstoffe, den meisten heute realisierten Lösungen überlegen ist. Gesamtenergetisch betrachtet ist der Vorteil noch deutlich größer, da sowohl Produktion, als auch Transport, Einbau und spätere Entsorgung von Dämmstoffen für erhebliche Umweltbelastungen sorgen.

Auch ergeben sich durch die Erfindung zusätzliche Vorteile in Bezug auf die Stabilität z.B. eines Bauwerks, da hier die Grobvakuum-Dämmschicht gleichzeitig sogar stabilisierend wirkt und nicht, wie Dämmstoffsysteme nach dem Stand der Technik, eine zusätzliche statische Belastung darstellen. Ebenso ist die Problematik der Durchfeuchtung für die Wirksamkeit der Dämmung nicht existent. Im Gegensatz zu üblichen Dämmstoffen kann die Grobvakuumdämmung somit in allen Klimazonen eingesetzt werden und ist auch generell z.B. als Perimeterdämmung geeignet.

Ein weiterer Vorteil ist, dass, z.B. an Hausecken, die Dämmung "nahtlos um die Ecke" geführt werden kann und die Bildung von Wärmebrücken, wie sie bei herkömmlichen Dämmsystemen besonders an den Stößen von Winkeln auftritt, unterbunden wird. Auch hinsichtlich der Schallisolierung bieten sich Vorteile, da ein Vakuum keinen Schall überträgt.

Weiterhin sind alle Materialien, die sich innerhalb des Vakuums befinden, vor Staub, Korrosion oder anderen Umwelteinflüssen geschützt. Auch können im Vakuum Lebewesen nicht überleben, Schimmelpilze können sich nicht weiter ausbreiten. Über einfache Druckmessgeräte kann die Unversehrtheit der Hülle kontrolliert werden. Somit sind z.B. für Einbruchmeldesysteme keine zusätzlichen, kostenintensiven Messtechniken notwendig.

Zusätzlich zu den Vorteilen der Sandwich-Bauweise kommt bei der Erfindung im Falle einer dauerhaften Evakuierung der Bauteile auch noch ein weiterer statischer Vorteil zum Tragen: Durch den atmosphärischen Druck wird eine Vorspannung bereitgestellt, die gleichmäßig auf das Bauteil einwirkt, keine Widerlager o.ä. benötigt, keine Spannungsspitzen verursacht und durch einfachste Druckmessung in ihrer Wirkung kontrolliert werden kann. Vorspannung wird heute hauptsächlich im Stahlbetonbau und bei Membranbauten eingesetzt, im Stahlbau ist dieses Prinzip noch nicht sehr verbreitet. Durch die Vorspannung ergeben sich vielfache Vorteile, die sich aus dem Stahlbau übertragen lassen. Dies sind eine Senkung des Verbrauchs an Normalstahl bei gleichzeitig niedrigem Verbrauch an hochwertigem Spannstahl und damit eine Kostensenkung der Gesamtkonstruktion, die Ermöglichung großer Spannweiten von bis zu mehreren hundert Metern, die Verringerung der Bauteilabmessungen, die Zunahme der Steifigkeit der Gesamtkonstruktion aufgrund von Durchbiegungsverminderung, die Verringerung der Verformung von Bauteilen, und die Beeinflussbarkeit der Schnittgrößen und Verformungen.

Ein Beispiel für eine derartige Anwendung mit evakuierter Struktur sind die Rotorblätter von Windkraftanlagen. Nach dem Stand der Technik werden sie als komplettes Bauteil in Verbundbauweise hergestellt. Diese zum Teil über 50m großen Bauteile stellen sehr hohe Anforderungen an Produktion und Logistik und sind nicht fehlertolerant. Eine Beschädigung der Bauteile erfordert oft deren Austausch, da Reparaturen nur eingeschränkt möglich sind. Die Recyclingfähigkeit von Produkten in Verbundbauweise ist außerdem sehr gering, da sich die verarbeiteten Materialien kaum sortenrein trennen lassen.

Die Überprüfung großflächiger Bauteile, wie z.B. die Rotorblätter von Windkraftanlagen, ist ebenfalls sehr komplex und erfordert einen hohen Zeitaufwand. Elektrisch leitende Schichten, die ein Monitoring über mögliche Schäden erlauben und eine zusätzliche Funktion für die Enteisung bieten, erhöhen Komplexität und Kosten in der Herstellung.

Wird ein Rotorblatt hingegen mit einer Grundstruktur aus evakuierten Hohlkammerprofilen nach Art der Erfindung konzipiert und anschließend mit Deckschichten und dazwischen liegenden Abstandhaltern versehen und dieses entstehende Sandwich dann ebenfalls evakuiert, so ergibt sich ein erhebliches Kostensenkungspotenzial. Die Bauteile können wie erwähnt ohne großen logistischen Aufwand vor Ort zusammengesetzt werden. Mit Vakuummessgeräten, die dauerhaft angeschlossen sind, lässt sich ein Defekt eines Segmentes sofort feststellen. Die Behebung dieses Defektes erfordert im Vergleich zu herkömmlichen Bauweisen nur einen minimalen Aufwand, da ein Austausch eines kleinen Segments ausreichend ist.

Der atmosphärische Druck, der gleichmäßig auf das komplette Bauteil einwirkt (Über- und Unterdruck, die im Betrieb auf das Rotorblatt einwirken, verändern diesen Wert), sorgt in Verbindung mit elastischen Elementen (z.B. Elastomere zwischen Deckschicht und Hohlkammerprofil und evtl. zusätzlich zwischen Deckschichten und Kernstruktur) für spannungsspitzenfreie Stabilität.

Ein evakuierbares Element nach der Art der Erfindung ist weiterhin hervorragend geeignet, im Falle eines Brandes mit einem geeigneten Brandschutzmittel oder einem kühlenden Schaum geflutet zu werden. Dies kann bei einem mehrschichtigen Aufbau des Elements auch gezielt nach der jeweiligen Situation in den einzelnen Schichten erfolgen. So kann z.B. eine äußere schwer entflammbare bis nicht brennbare Schicht durch z.B. einen kühlenden Schaum oder eine kühlende Flüssigkeit einmalig oder gar im Umlauf durchflutet werden und somit die Wärmeleitung zu den angrenzenden Schichten stark gemindert werden. Dies bietet nicht nur Schutz für angrenzende Räume, da eine Ausbreitung eines Brandes verzögert bis verhindert wird, sondern es können auch tragende Konstruktionen geschützt werden. Das Versagen von z.B. Stahlträgern kann so verzögert bis verhindert werden.

Ein Ausführungsbeispiel der Erfindung wird anhand einer Zeichnung näher erläutert. Darin zeigen:
FIG 1 einen Querschnitt durch ein Bauelement,
FIG 2 einen Querschnitt durch ein Bauelement mit gekrümmten Deckschichten,
FIG 3 eine Aufsicht auf eine Mehrzahl von gitterartig verbundenen Distanzelementen und
FIG 4 einen Querschnitt durch ein Bauelement und eine Außenform.

Gleiche Teile sind in allen Figuren mit den gleichen Bezugszeichen versehen.

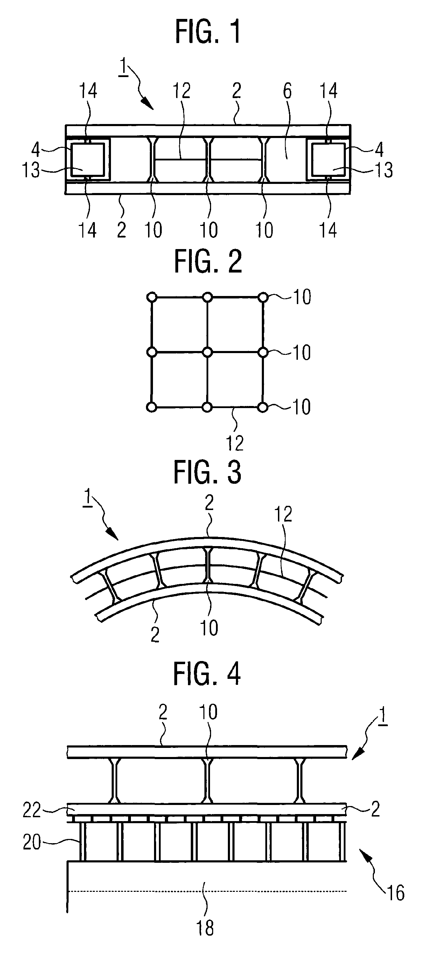

FIG 1 zeigt einen Querschnitt durch ein Bauelement 1. Es umfasst Deckschichten 2, die als feste Platten aufgebaut und parallel zueinander angeordnet sind, sowie eine Rahmenstruktur 4, die den Rand bildet, umlaufend geschlossen ist und so einen Hohlraum 6 bildet. Dadurch, dass die Rahmenstruktur 4 an die Deckschichten 2 angeformt ist, ist der Hohlraum 6 gasdicht verschließbar. Weiterhin sind im Hohlraum 6 Distanzelemente 10 angeordnet, die als sich an ihren Enden verdickende Zylinder ausgestaltet sind. Sie sind senkrecht zu den Deckschichten 2 angeordnet und stabilisieren den Abstand der Deckschichten 2 zueinander.

Bei der Montage werden Deckschichten 2, Rahmenstruktur 4 und Distanzelemente 10 getrennt angeliefert. Deckschichten 2 und Rahmenstruktur 4 lassen sich so platzsparend transportieren. Die Distanzelemente 10 sind durch eine Gitterstruktur 12 untereinander verbunden, so dass sie sich auch praktisch und stapelbar transportieren lassen. Vor Ort auf der Baustelle werden die einzelnen Teile aneinander angeordnet und der Hohlraum 6 wird mittels einer nicht näher dargestellten Vakuumpumpe evakuiert. Die Öffnung, über die die Vakuumpumpe angeschlossen war, wird entsprechend verschlossen. Alternativ kann eine permanent arbeitende Vakuumpumpe angeschlossen sein. Dies hat den Vorteil des permanenten Ausgleichs der notwendigerweise sich einstellenden Leckrate.

Die Verbindung und gasdichte Abschließung des Hohlraums 6 gegen den Außenraum wird bereits durch den Kraftschluss durch den atmosphärischen Druck auf die Deckplatten 2 erreicht. Es kann auch ein Verbindemittel wie z.B. ein Klebstoff oder eine mechanische Verbindung vorgesehen sein, um auch im Falle des Vakuumverlusts die Stabilität zu erhalten.

Damit im Hohlraum 6 auch dauerhaft ein Hochvakuum gehalten werden kann, welches besonders positive Eigenschaften hinsichtlich der Dämmung hat, weist die Rahmenstruktur 4 eine Kammer 13 auf. Die Kammer 13 hat Öffnungen 14, die sich zu der die Deckschichten 2 mit der Rahmenstruktur 4 verbindenden Schicht erstrecken. Die Kammer 13 wird durch eine nicht näher gezeigte Vakuumpumpe permanent auf einem Grobvakuum-Druckniveau gehalten. Die Öffnungen 14, die durch die Verbindungsschicht zwischen Rahmenstruktur 4 und Deckschichten 2 sowohl gegen die Außenumgebung, als auch gegen den Hohlraum 6 abgedichtet sind, bilden somit ein Zwischendruckniveau zwischen Außendruck und Hochvakuumniveau des Hohlraums 6, so dass die Leckrate reduziert wird.

FIG 2 zeigt eine alternative Ausführungsform des Bauelements 1 mit gekrümmten Deckschichten 2. Die Rahmenstruktur 4 ist hier nicht gezeigt. Eine gekrümmte Deckschicht 2 hat eine höhere Stabilität zur Folge.

FIG 3 zeigt eine Aufsicht auf die Distanzelemente 10 in einer 3x3-Anordnung. Beliebige größere Anordnungen sind möglich. Durch die Verbindung mit der Gitterstruktur 12 sind die Distanzelemente 10 leicht ineinander stapelbar und damit platzsparend zu transportieren. Durch Scharniere zwischen den Distanzelementen 10 und den Gitterstrukturen 12 können die Distanzelemente auch zusammengeschoben werden.

FIG 4 zeigt schließlich eine Ausführungsform der Erfindung mit nicht formgebenden Deckschichten 2. Diese werden auf einer als Vakuumtisch ausgestalteten Außenform 16 angeordnet, die im Wesentlichen eine feste Grundplatte 18 und ein darauf mit Stützen 20 angeordnetes Lochblech 22 umfasst. Der Bereich unter dem Lochblech 22 ist evakuierbar. So kann die noch flexible Deckschicht 2 auf der Außenform 16 angeordnet werden und durch den atmosphärischen Druck an die Form angepasst und so geformt werden. Nach der Evakuierung des Bauelements 1 wird dieses durch den atmosphärischen Druck in Form gehalten.

### Bezugszeichenliste

- 1: Bauelement
- 2: Deckschicht
- 4: Rahmenstruktur
- 6: Hohlraum
- 10: Distanzelement
- 12: Gitterstruktur
- 13: Kammer
- 14: Öffnung
- 16: Außenform
- 18: Grundplatte
- 20: Stütze
- 22: Lochblech

## Patentansprüche

1. Bauelement (1), umfassend zwei im Wesentlichen parallel zueinander angeordnete Deckschichten (2) und eine geschlossene Rahmenstruktur (4), die derart an die Deckschichten (2) angeformt und zwischen den Deckschichten (2) angeordnet ist, dass ein gasdichter Hohlraum (6) gebildet wird, wobei der Hohlraum (6) ein Vakuum enthält, wobei die Rahmenstruktur (4) eine Kammer (13) aufweist, **dadurch gekennzeichnet dass** die Kammer (13) ein Vakuum enthält, das einen höheren Druck als das des Hohlraums (6) hat.

2. Bauelement (1) nach Anspruch 1, bei dem zwischen den Deckschichten (2) ein Distanzelement (10) angeordnet ist.

3. Bauelement (1) nach einem der Ansprüche 1 oder 2, bei dem zwischen den Deckschichten (2) eine Mehrzahl von Distanzelementen (10) gitterartig untereinander verbunden sind.

4. Bauelement (1) nach einem der vorhergehenden Ansprüche, bei dem ein Verbindemittel zwischen den Deckschichten (2) und der Rahmenstruktur (4) und/oder den Deckschichten (2) und dem jeweiligen Distanzelement (10) eingebracht ist.

5. Bauelement (1) nach einem der vorhergehenden Ansprüche, bei dem zwischen den Deckschichten (2) ein poröses Material, insbesondere ein rieselfähiges, druckfestes Material angeordnet ist.

6. Bauelement (1) nach einem der vorhergehenden Ansprüche, bei dem im Hohlraum (6) und/oder der Kammer (13) ein mit dem Außenbereich verbundenes Rohr angeordnet ist.

7. Bauelement (1) nach einem der vorhergehenden Ansprüche, bei dem in die jeweilige Deckschicht (2) ein Rohr als Wärmetauscher integriert ist.

8. Verfahren zur Herstellung eines Bauelements (1) nach Anspruch 1, wobei zwei Deckschichten (2) parallel zueinander angeordnet werden, eine geschlossenen Rahmenstruktur (4) an die Deckschichten (2) angeformt wird, die Rahmenstruktur (4) zwischen den Deckschichten (2) derart angeordnet wird, dass ein gasdichter Hohlraum (6) gebildet wird und der Hohlraum (6) evakuiert wird, **dadurch gekennzeichnet, dass** vor der Evakuierung des Hohlraums (6) eine Kammer (13) der Rahmenstruktur (4) evakuiert wird, wobei die Kammer (13) einen höheren Druck als der Hohlraum (6) aufweist.

9. Verfahren nach Anspruch 8, bei dem zwischen den Deckschichten (2) ein Distanzelement (10) angeordnet wird.

10. Verfahren nach Anspruch 8 oder 9, bei dem Deckschichten (2) und Rahmenstruktur (4) an einer Innen- oder Außenform (16) angeordnet werden.

11. Gebäude mit einem Bauelement (1)nach einem der Ansprüche 1 bis 7 und/oder einem Bauelement (1), hergestellt mit dem Verfahren nach einem der Ansprüche 8 bis 10.

12. Gebäude nach Anspruch 11, bei dem eine Vakuumpumpe mit einem Hohlraum (6) verbunden ist.

13. Gebäude nach einem der Ansprüche 11 oder 12, bei dem ein Innenraum eines Bauteils vollständig evakuiert ist.

14. Verfahren zur Ausrüstung eines Gebäudes, bei dem ein Bauelement (1) nach einem der Ansprüche 1 bis 7 und/oder ein Bauelement (1), hergestellt mit dem Verfahren nach einem der Ansprüche 8 bis 10 an dem Gebäude angeordnet wird.

15. Luftfahrzeug mit einem rotationssymmetrischen Auftriebskörper mit einem Bauelement (1) nach einem der Ansprüche 1 bis 7 und/oder einem Bauelement (1), hergestellt mit dem Verfahren nach einem der Ansprüche 8 bis 10, wobei der Innenraum des Auftriebskörpers evakuiert ist.

## Claims

1. Structural element (1) comprising two cover layers (2), which are arranged so as to be substantially in parallel with one another, and a closed frame structure (4) which is formed integrally on the cover layers (2) and arranged between the cover layers (2) such that a gastight cavity (6) is formed, the cavity (6) containing a vacuum, the frame structure (4) comprising a chamber (13), **characterised in that** the chamber (13) contains a vacuum having a pressure which is higher than the pressure of the cavity (6).

2. Structural element (1) according to claim 1, wherein a spacer element (10) is arranged between the cover layers (2).

3. Structural element (1) according to either claim 1 or claim 2, wherein a plurality of spacer elements (10) are interconnected in a lattice-like manner between the cover layers (2).

4. Structural element (1) according to any of the preceding claims, wherein a connector is attached between the cover layers (2) and the frame structure (4) and/or between the cover layers (2) and the respective spacer elements (10).

5. Structural element (1) according to any of the preceding claims, wherein a porous material, in particular a pourable, compression-resistant material, is arranged between the cover layers (2).

6. Structural element (1) according to any of the preceding claims, wherein a pipe, connected to the outer region, is arranged in the cavity (6) and/or the chamber (13).

7. Structural element (1) according to any of the preceding claims, wherein a pipe in the form of a heat exchanger is integrated into the relevant cover layer (2).

8. Method for producing a structural element (1) according to claim 1, two cover layers (2) being arranged so as to be in parallel with one another, a closed frame structure (4) being integrally formed on the cover layers (2), the frame structure (4) being arranged between the cover layers (2) such that a gastight cavity (6) is formed and the cavity (6) is evacuated, **characterised in that**, prior to the evacuation of the cavity (6), a chamber (13) in the frame structure (4) is evacuated, the pressure in the chamber (13) being higher than the pressure in the cavity (6).

9. Method according to claim 8, wherein a spacer element (10) is arranged between the cover layers (2).

10. Method according to either claim 8 or claim 9, wherein cover layers (2) and the frame structure (4) are arranged on an inner or outer mould (16).

11. Building comprising a structural element (1) according to any of claims 1 to 7 and/or comprising a structural element (1) produced using the method according to any of claims 8 to 10.

12. Building according to claim 11, wherein a vacuum pump is connected to a cavity (6).

13. Building according to either claim 11 or claim 12, wherein an inner space in a component is completely evacuated.

14. Method for fitting out a building, wherein a structural element (1) according to any of claims 1 to 7 and/or a structural element (1) produced using the method according to any of claims 8 to 10 is arranged on the building.

15. Aircraft comprising a rotationally symmetrical lift body comprising a structural element (1) according to any of claims 1 to 7 and/or comprising a structural element (1) produced using the method according to any of claims 8 to 10, wherein the inner space in the lift body is evacuated.

## Revendications

1. Elément de construction (1), comprenant deux couches de couverture (2) disposées de façon essentiellement parallèle entre elles et une structure de cadre (4) fermée qui est formée de telle sorte sur les couches de couverture (2) et disposée de telle sorte entre les couches de couverture (2) qu'il est formé une cavité (6) étanche aux gaz, la cavité (6) contenant un vide, la structure de cadre (4) présentant une chambre (13), **caractérisé en ce que** la chambre (13) contient un vide qui a une pression plus élevée que celui de la cavité (6).

2. Elément de construction (1) selon la revendication 1, dans lequel un élément d'espacement (10) est disposé entre les couches de couverture (2).

3. Elément de construction (1) selon l'une des revendications 1 ou 2, dans lequel, entre les couches de couverture (2), une pluralité d'éléments d'espacement (10) sont raccordés les uns autres en forme de grille.

4. Elément de construction (1) selon l'une des revendications précédentes, dans lequel un moyen de raccordement est mis en place entre les couches de couverture (2) et la structure de cadre (4) et/ou entre les couches de couverture (2) et l'élément d'espacement (10) respectif.

5. Elément de construction (1) selon l'une des revendications précédentes, dans lequel un matériau poreux, en particulier un matériau résistant à la pression et coulant, est disposé entre les couches de couverture (2).

6. Elément de construction (1) selon l'une des revendications précédentes, dans lequel un tube raccordé à la zone extérieure est disposé dans la cavité (6) et/ou dans la chambre (13).

7. Elément de construction (1) selon l'une des revendications précédentes, dans lequel un tube est intégré, en tant qu'échangeur de chaleur, dans la couche de couverture (2) respective.

8. Procédé de fabrication d'un élément de construction (1) selon la revendication 1, deux couches de couverture (2) étant disposées parallèlement entre elles, une structure de cadre (4) fermée étant formée sur les couches de couverture (2), la structure de cadre (4) étant disposée entre les couches de couverture (2) de telle sorte qu'une cavité (6) étanche aux gaz est formée et que la cavité (6) est mise sous vide, **caractérisé en ce que**, avant la mise sous vide de la cavité (6), une chambre (13) de la structure de cadre (4) est mise sous vide, la chambre (13) présentant une pression plus élevée que la cavité (6).

9. Procédé selon la revendication 8, dans lequel un élément d'espacement (10) est disposé entre les couches de couverture (2).

10. Procédé selon la revendication 8 ou 9, dans lequel des couches de couverture (2) et une structure de cadre (4) sont disposées sur une forme intérieure ou extérieure (16).

11. Bâtiment avec un élément de construction (1) selon l'une des revendications 1 à 7 et/ou avec un élément de construction (1), fabriqué avec le procédé selon l'une des revendications 8 à 10.

12. Bâtiment selon la revendication 11, dans lequel une pompe à vide est raccordée à une cavité (6).

13. Bâtiment selon l'une des revendications 11 ou 12, dans lequel un espace intérieur d'un composant est entièrement mis sous vide.

14. Procédé d'équipement d'un bâtiment, dans lequel un élément de construction (1) selon l'une des revendications 1 à 7 et/ou un élément de construction (1), fabriqué avec le procédé selon l'une des revendications 8 à 10, est disposé sur le bâtiment.

15. Avion avec un corps de sustentation à symétrie de révolution, avec un élément de construction (1) selon l'une des revendications 1 à 7 et/ou avec un élément de construction (1), fabriqué avec le procédé selon l'une des revendications 8 à 10, l'espace intérieur du corps de sustentation étant mis sous vide.
